(19) Europäisches Patentamt
European Patent Office
Office européen des brevets

(11) Publication number: **0 118 090**
**B1**

(12) # EUROPEAN PATENT SPECIFICATION

(45) Date of publication of the patent specification: **05.11.86**

(51) Int. Cl.⁴: **C 07 F 9/10 // A61K31/685**

(21) Application number: **84102006.8**

(22) Date of filling: **25.02.84**

(54) **New 3-alkylthio-2-O-carbamoyl-propane-1.2-diol-1-O-phosphocholines, and processes for their preparation.**

(30) Priority: **05.03.83 DE 3307924**

(43) Date of publication of application:
**12.09.84 Bulletin 84/37**

(45) Publication of the grant of the patent:
**05.11.86 Bulletin 86/45**

(84) Designated Contracting States:
**AT BE CH DE FR GB IT LI LU NL SE**

(56) References cited:
**EP-A-0 043 472**
**EP-A-0 070 433**
**EP-A-0 072 936**

(73) Proprietor: **A. Nattermann & Cie. GmbH, Nattermannallee 1, D-5000 Köln 30 (DE)**

(72) Inventor: **Lautenschläger, Hans- Heiner, Dr., Neusser Gasse 50, D-5024 Pulheim (DE)**
Inventor: **Betzing, Hans, Dr., Heidestock 7, D-5014 Kerpen (DE)**
Inventor: **Winkelmann, Johannes, Dr., Frankfurter Strasse 269, D-5000 Köln 90 (DE)**

(74) Representative: **Redies, Bernd, Dr. rer. nat., COHAUSZ & FLORACK Patentanwaltsbüro Schumannstrasse 97 Postfach 14 01 47, D-4000 Düsseldorf 1 (DE)**

**EP 0 118 090 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1986

**Description**

The present invention is related to new 3-alkylthio-2-O-carbamoyl-propane-1,2-diol-1-O-phosphocholines and processes for their preparation.

The compounds of the invention correspond to the general formula I

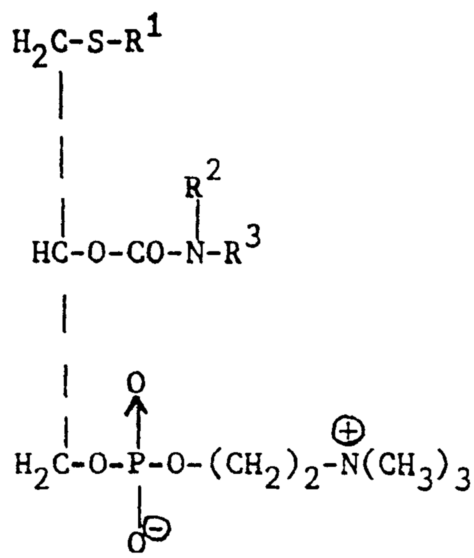

I

wherein $R^1$ is straight chain saturated or unsaturated aliphatic hydrocarbyl radical with 10 to 20 carbon atoms, and $R^2$ and $R^3$, which may be the same or different, are hydrogen atoms or straight or branched chain saturated or unsaturated aliphatic hydrocarbyl radicals with 1 to 20 carbon atoms, or $R^3$ is a phenyl group, a phenyl group mono-substituted by $C_{1-3}$-alkyl, $C_{1-3}$ alkoxy halogen or trifluoromethyl, or a benzyl group and $R^2$ is a hydrogen atom, provided $R^2$ and $R^3$ are not both hydrogen atoms.

EP-A-53472 and 70433 show similar compounds having however, an acyl group in the position 2 of the propane chain. These compounds are subject to the attack of phospholipase $A_2$ and various esterases. EP-A-72936 discloses compounds which are similar to the present compounds but differ in that they are characterized by an alkoxy group in position 3 of the propane chain.

Compounds of the invention are for example:

3-Hexadecylthio-2,0-methylcarbamoyl-propane-1,2-diol-1-0-phosphocholine,
2-0-ethylcarbamoyl-3-hexadecylthio-propane-1,2-diol-1-0-phosphocholine,
3-hexadecylthio-2-0-propylcarbamoyl-propane-1,2-diol-1-0-phosphocholine,
3-hexadecylthio-2-0-isopropylcarbamoyl-propane-1,2-diol-1-0-phosphocholine,
2-0-butylcarbamoyl-3-hexadecylthio-propane-1,2-diol-1-0-phosphocholine,
3-hexadecylthio-2-0-pentylcarbamoyl-propane-1,2-diol-1-0-phosphocholine,
3- exadecylthio-2-0-hexylcarbamoyl-propane-1,2-diol-1-0-phosphocholine,
2-0-methylcarbamoyl-3-octadecylthio-propane-1,2-diol-1-0-phosphocholine,
2-0-ethylcarbamoyl-3-octadecylthio-propane-1,2-diol-1-0-phosphocholine,
3-octadecylthio-2-0-propylcarbamoyl-propane-1,2-diol-1-0-phosphocholine,
2-0-isopropylcarbamoyl-3-octadecylthio-propane-1,2-diol-1-0-phosphocholine,
2-0-butylcarbamoyl-3-octadecylthio-propane-1,2-diol-1-0-phosphocholine,
3-octadecylthio-2-0-pentylcarbamoyl-propane-1,2-diol-1-0-phosphocholine,
2-0-hexylcarbamoyl-3-octadecylthio-propane-1,2-diol-1-0-phosphocholine,
2-0-methylcarbamoyl-3-oleylthio-propane-1,2-diol-1-0-phosphocholine,
2-0-ethylcarbamoyl-3-linoleylthio-propane-1,2-diol-1-0-phosphocholine,
2-0-dimethylcarbamoyl-3-octadecylthio-propane-1,2-diol-1-0-phosphocholine,
2-0-dimethylcarbamoyl-3-hexadecylthio-propane-1,2-diol-1-0-phosphocholine,
2-0-decylcarbamoyl-3-hexadecylthio-propane-1,2-diol-1-0-phosphocholine,
3-hexadecylthio-2-0-undecylcarbamoyl-propane-1,2-diol-1-0-phosphocholine,
2-0-dodecylcarbamoyl-3-hexadecylthio-propane-1,2-diol-1-0-phosphocholine,
3-hexadecylthio-2-0-tetradecylcarbamoyl-propane-1,2-diol-1-0-phosphocholine,
2-0-hexadecylcarbamoyl-3-hexadecylthio-propane-1,2-diol-1-0-phosphocholine,
3-hexadecylthio-2-0-octadecylcarbamoyl-propane-1,2-diol-1-0-phosphocholine,
2-0-eicosylcarbamoyl-3-hexadecylthio-propane-1,2-diol-1-0-phosphocholine,
2-0-decylcarbamoyl-3-octadecylthio-propane-1,2-diol-1-0-phosphocholine,

3-octadecylthio-2-0-undecylcarbamoyl-propane-1,2-diol-1-0-phosphocholine,
2-0-dodecylcarbamoyl-3-octadecylthio-propane-1,2-diol-1-0-phosphocholine,
3-octadecylthio-2-0-tetradecylcarbamoyl-propane-1,2-diol-1-0-phosphocholine,
2-0-hexadecylcarbamoyl-3-octadecylthio-propane-1,2-diol-1-0-phosphocholine,
2-0-octadecylcarbamoyl-3-octadecylthio-propane-1,2-diol-1-0-phosphocholine,
2-0-eicosylcarbamoyl-3-octadecylthio-propane-1,2-diol-1-0-phosphocholine,
3-hexadecylthio-2-0-phenylcarbamoyl-propane-1,2-diol-1-0-phosphocholine,
2-0-(2-fluorophenyl)-carbamoyl-3-hexadecylthio-propane-1,2-diol-1-0-phosphocholine,
2-0-(3-fluorophenyl)-carbamoyl-3-hexadecylthio-propane-1,2-diol-1-0-phosphocholine,
2-0-(4-fluorophenyl)-carbamoyl-3-hexadecylthio-propane-1,2-diol-1-0-phosphocholine,
2-0-(2-chlorophenyl)-carbamoyl-3-hexadecylthio-propane-1,2-diol-1-0-phosphocholine,
2-0-(3-chlorophenyl)-carbamoyl-3-hexadecylthio-propane-1,2-diol-1-0-phosphocholine,
2-0-(4-chlorophenyl)-carbamoyl-3-hexadecylthio-propane-1,2-diol-1-0-phosphocholine,
2-0-(4-tromophenyl)-carbamoyl-3-hexadecylthio-propane-1,2-diol-1-0-phosphocholine,
3-hexadecylthio-2-0-(2-methylphenyl)-carbamoyl-propane-1,2-diol-1-0-phosphocholine,
3-hexadecylthio-2-0-(3-methylphenyl)-carbamoyl-propane-1,2-diol-1-0-phosphocholine,
3-hexadecylthio-2-0-(4-methylphenyl)-carbamoyl-propane-1,2-diol-1-0-phosphocholine,
3-hexadecylthio-2-0-(2-methoxyphenyl)-carbamoyl-propane-1,2-diol-1-0-phosphocholine,
3-hexadecylthio-2-0-(4-methoxyphenyl)-carbamoyl-propane-1,2-diol-1-0-phosphocholine,
2-0-(2-ethoxyphenyl)-carbamoyl-3-hexadecylthio-propane-1,2-diol-1-0-phosphocholine,
2-0-(4-ethoxyphenyl)-carbamoyl-3-hexadecylthio-propane-1,2-diol-1-0-phosphocholine,
3-hexadecylthio-2-0-(2-trifluoromethylphenyl)-carbamoyl-propane-1,2-diol-1-0-phosphocholine,
3-hexadecylthio-2-0-(3-trifluoromethylphenyl)-carbamoyl-propane-1,2-diol-1-0-phosphocholine,
3-oleylthio-2,0-phenylcarbamoyl-propan-1,2-diol-1-0-phosphocholine,
3-linoleylthio-2-0-phenylcarbamoyl-propane-1,2-diol-1-0-phosphocholine,
3-octadecylthio-2-0-phenylcarbamoyl-propane-1,2-diol-1-0-phosphocholine,
2-0-(2-fluorophenyl)-carbamoyl-3-octadecylthio-propane-1,2-diol-1-0-phosphocholine,
2-0-(3-fluorophenyl)-carbamoyl-3-octadecylthio-propane-1,2-diol-1-0-phosphocholine,
2-0-(4-fluorophenyl)-carbamoyl-3-octadecylthio-propane-1,2-diol-1-0-phosphocholine,
2-0-(2-chlorophenyl)-carbamoyl-3-octadecylthio-propane-1,2-diol-1-0-phosphocholine,
2-0-(3,chlorophenyl)-carbamoyl-3-octadecylthio-propane-1,2-diol-1-0-phosphocholine,
2-0-(4-chlorophenyl)-carbamoyl-3-octadecylthio-propane-1,2-diol-1-0-phosphocholine,
2-0-(4-bromophenyl)-carbamoyl-3-octadecylthio-propane-1,2-diol-1-0-phosphocholine,
2-0-(2-methylphenyl)-carbamoyl-3-octadecylthio-propane-1,2-diol-1-0-phosphocholine,
2-0-(3-methylphenyl)-carbamoyl-3-octadecylthio-propane-1,2-diol-1-0-phosphocholine,
2-0-(4-methylphenyl)-carbamoyl-3-octadecylthio-propane-1,2-diol-1-0-phosphocholine,
2-0-(2-methoxypnenyl)-carbamoyl-3-octadecylthio-propane-1,2-diol-1-0-phosphocholine,
2-0-(4-methoxyphenyl)-carbamoyl-3-octadecylthio-propane-1,2-diol-1-0-phosphocholine,
2-0-(2-ethoxyphenyl)-carbamoyl-3-octadecylthio-propane-1,2-diol-1-0-phosphocholine,
2-0-(4-ethoxyphenyl)-carbamoyl-3-octadecylthio-propane-1,2-diol-1-0-phosphocholine,
3-octadecylthio-2-0-(2-trifluoromethylphenyl)-carbamoyl-propane-1,2-diol-1-0-phosphocholine,
3-octadecylthio-2-0-(3-trifluoromethylphenyl)-carbamoyl-propane-1,2-diol-1-0-phosphocholine,
2-0-benzylcarbamoyl-3-octadecylthio-propane-1,2-diol-1-0-phosphocholine,
2-0-benzylcarbamoyl-3-hexadecylthio-propane-1,2-diol-1-0-phosphocholine.

The compounds of the invention possess valuable pharmacological properties and are thus suitable for use as active ingredients in medicaments.

Of the substances of the invention listed, some, e.g. 3-hexadecylthio-2-0-methylcarbamoyl-propane-1,2-diol-1-0-phosphocholine, or 2-0-ethylcarbamoyl-3-octadecylthio-propane-1,2-diol-1-0-phosphocholine, are particularly preferred. The said compounds can be used for the treatment of high blood pressure, various rheumatic and some atherosclerotic conditions as well as for tumour therapy in humans.

The compounds of formula I are administered in the form of pharmaceutical preparations for enteral, oral, rectal as well as parenteral administration, and they contain the pharmaceutical active ingredients alone or together with a conventional pharmaceutically usable carrier material. Advantageously the pharmaceutical presentation of the active ingredient is in the form of single doses, which are adapted to the desired mode of administration, e.g. tablets, dragees, capsules, suppositories, granulates, solutions, emulsions or suspensions. The dosage of the compounds of formula I lies normally between 1 and 1000 mg. per dose, preferably between 1 to 10 mg. per dose, and can be administered once or more times, preferably 2 to 3 times, daily.

Also preferred are compounds, e.g. 3-hexadecylthio-2-0-hexadecylcarbamoyl-propane-1,2-diol-1-0-phosphocholine, which possess clear advantages compared with the natural or synthetic 1.2-diacyl-glycero-3-phosphocholines (e.g. GB-PA-1,523,965) previously used in liposome technology, since they, in contrast to the latter phospholipids, are resistant to phospholipase $A_2$ and thus permit better transfer of the included active ingredient at the site of their effect.

The invented substances of the formula I in which $R^2$ = H are prepared by reaction of the lyso-compounds II, wherein $R^1$ has the meaning given in formula I, with the corresponding alkyl or aryl isocyanates of the formula III.

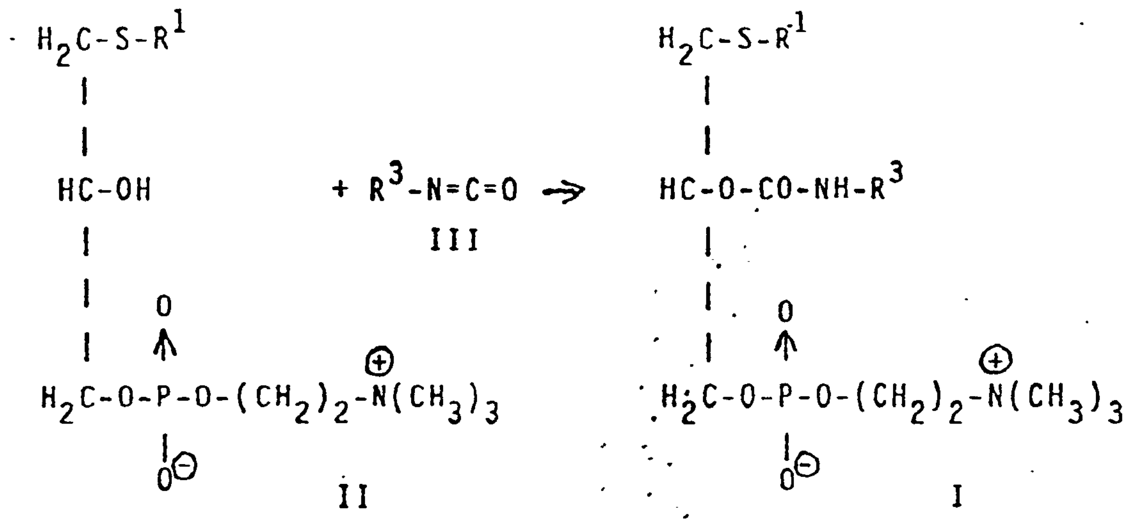

III II I

The reaction is usefully carried out in organic aprotic solvents e.g. chloroform, acetone, dimethylformamide or mixtures thereof, with optional use of a catalyst, especially a Lewis base, e.g. triethylamine, pyridine, dimethylaminopyridine, dimethylformamide, at temperatures between 0° and 100° C, preferably 400° to 60° C.

As starting compounds of the formula II there may be mentioned:
3-Decylthio-propane-1,2-diol-1-0-phosphocholine,
3-undecylthio-propane-1,2-diol-1-0-phosphocholine,
3-dodecylthio-propane-1,2-diol-1-0-phosphocholine,
3-tridecylthio-propane-1,2-diol-1-0-phosphocholine,
3-tetradecylthio-propane-1,2-diol-1-0-phosphocholine,
3-pentadecylthio-propane-1,2-diol-1-0-phosphocholine,
3-hexadecylthio-propane-1,2-diol-1-0-phosphocholine,
3-heptadecylthio-propane-1,2-diol-1-0-phosphocholine,
3-octadecylthio-propane-1,2-diol-1-0-phosphocholine,
3-nonadecylthio-propane-1,2-diol-1-0-phosphocholine,
3-eicosylthio-propane-1,2-diol-1-0-phosphocholine,
3-oleylthio-propane-1,2-diol-1-0-phosphocholine,
3-linoleylthio-propane-1,2-diol-1-0-phosphocholine,
and the lyso-compounds can be used in their R- or S-form or as a racemic mixture.

As starting compounds of formula III there may be mentioned:
methyl isocyanate, ethyl isocyanate, propyl isocyanate, isopropyl isocyanate, allyl isocyanate, butyl isocyanate, pentyl isocyanate, hexyl isocyanate, decyl isocyanate, undecyl isocyanate, dodecyl isocyanate, tridecyl isocyanate, tetradecyl isocyanate, pentadecyl isocyanate, hexadecyl isocyanate, octadecyl isocyanate, nonadecyl isocyanate, eicosyl isocyanate, oleyl isocyanate, linoleyl isocyanate, phenyl isocyanate, 2-fluorophenyl isocyanate, 3-fluorophenyl isocyanate, 4-fluorophenyl isocyanate,
2-chlorophenyl isocyanate, 3-chlorophenyl isocyanate,
4-chlorphenyl isocyanate, 4-bromophenyl isocyanate,
2-methylphenyl isocyanate, 3-methylphenyl isocyanate,
4-methylphenyl isocyanate, 2-methoxyphenyl isocyanate,
4-methoxyphenyl isocyanate, 2-ethoxyphenyl isocyanate,
4-ethoxyphenyl isocyanate, 2-(trifluoromethyl)-phenyl isocyanate, 3-(trifluoromethyl)-phenyl isocyanate, benzyl isocyanate.

The 3-alkylthiopropane-1,2-diol-1-0-phosphocholines of the formula II used as starting compounds can be synthesized from the corresponding 2-0-acyl-3-alkylthio-propane-1,2-diol-1-0-phosphocholines by conventional procedures, e.g. by enzymatic splitting (Phospholipase $A_2$) or mild alkaline hydrolysis.

The 3-alkylthio-2-0-disubstitutedcarbamoyl-propane-1,2-diol-1-0-phosphocholines of the formula I can be synthesized from the said lyso-compounds II by reaction with disubstitutedcarbamic acid halides, especially with chlorides of the formula IV

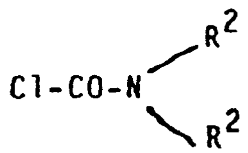

IV

wherein $R^2$ and $R^3$ are straight or branched chain, saturated or unsaturated aliphatic hydrocarbyl radicals having 1 to 20 carbon atoms, such as

N,N-dimethylcarbamic acid chloride, N-ethyl-N-methylcarbamic acid chloride, N,N-diethylcarbamic acid chloride, N-methyl-N-propylcarbamic acid chloride, N,N-dipropylcarbamic acid chloride, in inert organic solvents, e.g. chloroform, as well as solvent mixtures, with optional addition of conventional bases as acid acceptors, e.g. tertiary amines, metal oxides, metal carbonates. The preparation of the compounds of the invention is described in greater detail by the following Examples. The melting points were measured with a Buechi 510 melting point determination apparatus and are uncorrected.

**Example 1**

3-Hexadecylthio-2-0-methylcarbamoyl-propane-1,2-diol-1-0-phosphocholine.

a) β-Bromoethyl-(3-hexadecylthio-2-hydroxypropyl)-phosphate.

A mixture of 30 g of hexadecylthio-propan-1.2-diol and 300 ml of dry chloroform is cooled to 0°C and a solution of 21.6 g of β-bromoethylphosphoric acid dichloride in 25 ml of chloroform and a solution of 7.2 ml of pyridine in 25 ml of chloroform are simultaneously and slowly added dropwise to the mixture with stirring. After half an hour of further stirring another 7.2 ml of pyridine is added and the mixture is stirred for 12 hours at room temperature and, following addition of ice water, stirred for a further hour. The organic phase is separated, washed neutral with water and sodium chloride solution, dried over sodiumsulfate and evaporated in vacuo. The residue is purified by column chromatography (silica gel//chloroform/methanol).

Yield: 11.9 g. Mp: 197 to 198° C.

b) β-Bromoethyl-(2-acetyloxy-3-hexadecylthiopropyl)-phosphate.

14.6 g of β-bromoethyl-(3-hexadecylthio-2-hydroxy-propyl)-phosphate is dissolved in 100 ml of dry chloroform and the solution is treated with 7 ml of pyridine and 8.2 ml of acetic anhydride. After stirring at room temperature for 48 hours a little water is added and stirring continued for 15 minutes. The mixture is evaporated in vacuo and the residue is purified by column chromatography (silica gel//chloroform/methanol).

Yield: 5.1 g. Mp: >63°C.

c) 2-0-Acetyl-3-hexadecylthio-propane-1,2-dio1-1-0-phospho-choline.

1.8 g of β-bromoethyl-(2-acetoxy-3-hexadecylthiopropyl)-phosphate is dissolved in 3 ml of toluene, the solution is treated with 3 ml of a 20 % solution of trimethylamine in toluene and stirred for 3 hours at 60°C in a closed vessel. The reaction mixture is evaporated in vacuo and the residue purified by column chromatography (silica gel//chloroform/ methanol/water = 80/20/2, 40/20/2, 20/20/2 (V/V/V)).

Yield: 0.9 g. Mp: 246 to 249° C (dec).

d) 3-Hexadecylthio-propane-1,2-diol-1-0-phosphocholine.

0.8 g of 2-0-acetyl-3-hexadecylthio-propane-1,2-diol-1-0-phosphocholine are dissolved in 15 ml of ethanol and 0.2 g of powdered potassium carbonate is added. After stirring for 48 hours, the salts are filtered off and washed with chloroform, the combined filtrates evaporated in vacuo and the residue purified by column chromatography (silica gel// chloroform/methanol/water = 80/20/2, 60/20/2, 50/20/2, 40/20/2, 30/20/2, 20/20/2 (V/V/V)).

Yield: 0.4 g. Mp: 252 to 254° C.

e) 3-Hexadecylthio-2-0-methylcarbamoyl-propane-1,2-diol-1-0-phosphocholine.

0.17 g of 3-hexadecylthio-propane-1,2-diol-1-0-phospho-choline is dissolved in 10 ml of dry chloroform and 1 ml of dimethylformamide, and 2 ml of methyl isocyanate is added. After stirring for 48 hours at 40°C, the solution is evaporated in vacuo and the residue purified by column chromatography (silica gel//chloroform/methanol/water = 80/20/2, 60/20/2, 40/20/2, 20/20/2 (V/V/V)).

Yield: 0.14 g. Mp. 252 to 254° C.

**Example 2**

2-0-Ethylcarbamoyl-3-hexadecylthio-propane-1,2-diol-1-0-phosphocholine.

0.17 g of 3-hexadecylthio-propane-1,2-diol-1-0-phospho-choline are dissolved in 10 ml of dry chloroform, and

1 ml of dimethylformamide and 1 ml of ethyl isocyanate is added. After stirring for 48 hours at 40°C, the solution is evaporated in vacuo and the residue purified by column chromatography (silica gel//chloroform/methanol/water 80/20/2, 60/20/2, 40/20/2, 20/20/2 (V/V/V)).

Yield: 0.15 g. Mp: 250 to 252°C.

The following are prepared in a manner similar to examples 1 and 2:
3-Hexadecylthio-2-0-propylcarbamoyl-propane-1,2-diol-1-0-phosphocholine,
3-hexadecylthio-2-0-isopropylcarbamoyl-propane-1,2-diol-1-0-phosphocholine,
2-0-butylcarbamoyl-3-hexadecylthio-propane-1,2-diol-1-0-phosphocholine,
3-hexadecylthio-2-0-pentylcarbamoyl-propane-1,2-diol-1-0-phosphocholine,
3-hexadecylthio-2-0-hexylcarbamoyl-propane-1,2-diol-1-0-phosphocholine,
2-0-methylcarbamoyl-3-octadecylthio-propane-1,2-diol-1-0-phosphocholine,
2-0-ethylcarbamoyl-3-octadecylthio-propane-1,2-diol-1-0-phosphocholine,
3-octadecylthio-2-0-propylcarbamoyl-propane-1,2-diol-1-0-phosphocholine,
2-0-isopropylcarbamoyl-3-octadecylthio-propane-1,2-diol-1-0-phosphocholine,
2-0-butylcarbamoyl-3-octadecylthio-propane-1,2-diol-1,0-phosphocholine,
3-octadecylthio-2-0-pentylcarbamoyl-propane-1,2-diol-1-0-phosphocholine,
2-0-hexylcarbamoyl-3-octadecylthio-propane-1,2-diol-1-0-phosphocholine,
3-linoleylthio-2-0-methylcarbamoyl-propane-1,2-diol-1-0-phosphocholine,
2-0-ethylcarbamoyl-3-linoleylthio-propane-1,2-diol-1-0-phosphocholine,
3-linoleylthio-2-0-propylcarbamoyl-propane-1,2-diol-1-0-phosphocholine,
2-0-butylcarbamoyl-3-linoleylthio-propane-1,2-diol-1-0-phosphocholine,
3-linoleylthio-2-0-pentylcarbamoyl-propane-1,2-diol-1-0-phosphocholine,
2-0-hexylcarbamoyl-3-linoleylthio-propane-1,2-diol-1-0-phosphocholine,
2-0-methylcarbamoyl-3-oleylthio-propane-1,2-diol-1-0-phosphocholine,
2-0-ethylcarbamoyl-3-oleylthio-propane-1,2-diol-1-0-phosphocholine,
3-oleylthio-2-0-propylcarbamoyl-propane-1,2-diol-1-0-phosphocholine,
2-0-butylcarbamoyl-3-oleylthio-propane-1,2-diol-1-0-phosphocholine,
3-oleylthio-2-0-pentylcarbamoyl-propane-1,2-diol-1-0-phosphocholine,
2-0-hexylcarbamoyl-3-oleylthio-propane-1,2-diol-1-0-phosphocholine.

### Example 3

2-0-Hexadecylcarbamoyl-1-hexadecylthio-propane-1,2-diol-1-0-phosphocholine.

A mixture of 100 mg of hexadecyl-thio-propane-1,2-diol-1-0-phosphocholine, 200 mg of hexadecyl isocyanate, 10 ml of chloroform and 1 ml of dimethylformamide is stirred at 60°C (48 hours). The excess alkyl isocyanate is hydrolyzed by addition of a little water and the mixture is substantially evaporated in vacuo. The residue is purified by column chromatography (silica gel// chloroform/methanol/water).

Yield: 93 mg. Mp: 220 to 225°C.

The following are prepared by analogous methods:
3-Hexadecylthio-2-0-octadecylcarbamoyl-propane-1,2-diol-1-0-phosphocholine,
2-0-hexadecylcarbamoyl-3-octadecylthio-propane-1,2-diol-1-0-phosphocholine,
3-octadecylthio-2-0-octadecylcarbamoyl-propane-1,2-diol-1-0-phosphocholine,
2-0-decylcarbamoyl-3-hexadecylthio-propane-1,2-diol-1-0-phosphocholine,
3-hexadecylthio-2-0-undecylcarbamoyl-propane-1,2-diol-1-0-phosphocholine,
2-0-dodecylcarbamoyl-3-hexadecylthio-propane-1,2-diol-1-0-phosphocholine,
3-hexadecylthio-2-0-tetradecylcarbamoyl-propane-1,2-diol-1-0-phosphocholine,
2-0-eicosylcarbamoyl-3-hexadecylthio-propane-1,2-diol-1-0-phosphocholine,
2-0-decylcarbamoyl-3-octadecylthio-propane1,2-diol-1-0-phosphocholine,
3-octadecylthio-2-0-undecylcarbamoyl-propane-1,2-diol-1-0-phosphocholine,
2-0-dodecylcarbamoyl-3-octadecylthio-propane-1,2-diol-1-0-phosphocholine,
3-octadecylthio-2-0-tetradecylcarbamoyl-propane-1,2-diol-1-0-phosphocholine,
2-0-eicosylcarbamoyl-3-octadecylthio-propane-1,2-diol-1-0-phosphocholine,
3-octadecylthio-2-0-oleylcarbamoyl-propane-1,2-diol-1-0-phosphocholine,
2-0-linoleylcarbamoyl-3-octadecylthio-propane-1,2-diol-1-0-phosphocholine,
3-hexadecylthio-2-0-oleylcarbamoyl-propane-1,2-diol-1-0-phosphocholine,
3-hexadecylthio-2-0-linoleylcarbamoyl-propane-1,2-diol-1-0-phosphocholine,
2-0-oleylcarbamoyl-3-oleylthio-propane-1,2-diol-1-0-phosphocholine,
3-hexadecylthio-2-0-phenylcarbamoyl-propane-1,2-diol-1-0-phosphocholine,
2-0-(2-fluorophenyl)-carbamoyl-3-hexadecylthio-propane-1,2-diol-1-0-phosphocholine,
2-0-(3-fluorophenyl)-carbamoyl-3-hexadecylthio-propane-1,2-diol-1-0-phosphocholine,
2-0-(4-fluorophenyl)-carbamoyl-3-hexadecylthio-propane-1,2-diol-1-0-phosphocholine,
2-0-(2-chlorophenyl)-carbamoyl-3-hexadecylthio-propane-1,2-diol-1-0-phosphocholine,
2-0-(3-chlorophenyl)-carbamoyl-3-hexadecylthio-propane-1,2-diol-1-0-phosphocholine,

2-0-(4-chlorophenyl)-carbamoyl-3-hexadecylthio-propane-1,2-diol-1-0-phosphocholine,
2-0-(4-bromophenyl)-carbamoyl-3-hexadecylthio-propane-1,2-diol-1-0-phosphocholine,
3-hexadecylthio-2-0-(2-methylphenyl)-carbamoyl-propane-1,2-diol-1-0-phosphocholine,
3-hexadecylthio-2-0-(3-methylphenyl)-carbamoyl-propane-1,2-diol-1-0-phosphocholine,
3-hexadecylthio-2-0-(4-methylphenyl)-carbamoyl-propane-1,2-diol-1-0-phosphocholine,
3-hexadecylthio-2-0-(2-methoxyphenyl)-carbamoyl-propane-1,2-diol-1-0-phosphocholine,
3-hexadecylthio-2-0-(4-methylphenyl)-carbamoyl-propane-1,2-diol-1-0-phosphocholine,
2-0-(2-ethoxyphenyl)-carbamoyl-3-hexadecylthio-propane-1,2-diol-1-0-phosphocholine,
2-0-(4-ethoxyphenyl)-carbamoyl-3-hexadecylthio-propane-1,2-diol-1-0-phosphocholine,
3-hexadecylthio-2-0-(2-trifluoromethylphenyl)-carbamoyl-propane-1,2-diol-1-0-phosphocholine,
3-hexadecylthio-2-0-(3-trifluoromethylphenyl)-carbamoyl-propane-1,2-diol-1-0-phosphocholine,
3-olcylthio-2-0-phenylcarbamoyl-propane-1,2-diol-1-0-phosphocholine,
3-linoleylthio-2-0-phenylcarbamoyl-propane-1,2-diol-1-0-phosphocholine,
3-octadecylthio-2-0-phenylcarbamoyl-propane-1,2-diol-1-0-phosphocholine,
2-0-(2-fluorophenyl)-carbamoyl-3-octadecylthio-propane-1,2-diol-1-0-phosphocholine,
2-0-(3-fluorophenyl)-carbamoyl-3-octadecylthio-propane-1,2-diol-1-0-phosphocholine,
2-0-(4-fluorophenyl)-carbamoyl-3-octadecylthio-propane-1,2-diol-1-0-phosphocholine,
2-0-(2-chlorophenyl)-carbamoyl-3-octadecylthio-propane-1,2-diol-1-0-phosphocholine,
2-0-(3-chlorophenyl)-carbamoyl-3-octadecylthio-propane-1,2-diol-1-0-phosphocholine,
2-0-(4-chlorophenyl)-carbamoyl-3-octadecylthio-propane-1,2-diol-1-0-phosphocholine,
2-0-(4-bromophenyl)-carbamoyl-3-octadecylthio-propane-1,2-diol-1-0-phosphocholine,
2-0-(2-methylphenyl)-carbamoyl-3-octadecylthio-propane-1,2-diol-1-0-phosphocholine,
2-0-(3-methylphenyl)-carbamoyl-3-octadecylthio-propane-1,2-diol-1-0-phosphocholine,
2-0-(4-methylphenyl)-carbamoyl-3-octadecylthio-propane-1,2-diol-1-0-phosphocholine,
2-0-(2-methoxyphenyl)-carbamoyl-3-octadecylthio-propane-1,2-diol-1-0-phosphocholine,
2-0-(4-methoxyphenyl)-carbamoyl-3-octadecylthio-propane-1,2-diol-1-0-phosphocholine,
2-0-(2-ethoxyphenyl)-carbamoyl-3-octadecylthio-propane-1,2-diol-1-0-phosphocholine,
2-0-(4-ethoxyphenyl)-carbamoyl-3-octadecylthio-propane-1,2-diol-1-0-phosphocholine,
3-octadecylthio-2-0-(2-trifluoromethylphenyl)-carbamoyl-propane-1,2-diol-1-0-phosphocholine,
3-octadecylthio-2-0-(3-trifluoromethylphenyl)-carbamoyl-propane-1,2-diol-1-0-phosphocholine,
2-0-benzylcarbamoyl-3-hexadecylthio-propane-1,2-diol-1-0-phosphocholine,
2-0-benzylcarbamoyl-3-octadecylthio-propane-1,2-diol-1-0-phosphocholine.

**Example 4**

2-0-Dimethylcarbamoyl-3-hexadecylthio-propane-1,2-diol-1-0-phosphocholine.

A mixture of 100 mg of 3-hexadecylthio-propane-1,2-diol-1-0-phosphocholine, 40 mg of dimethyl carbamic acid chloride and 60 mg of silver carbonate in 10 ml of chloroform is stirred for 24 hours at 50°C, the solvent taken off in vacuo and the residue purified by column chromatography (silica gel//chloroform/methanol/water).

Yield: 83 mg. Mp: 239 to 241°C.

The following are prepared in a similar manner to example 4:

2-0-Dimethylcarbamoyl-3-octadecylthio-propane-1,2-diol-1-0 phosphocholine,
2-0-dimethylcarbamoyl-3-eicosylthio-propane-1,2-diol-1-0-phosphocholine.

**Claims**

1. 3-Alkylthio-2-0-carbamoyl-propane-1,2-diol-1-0-phosphocholines of the general formula I

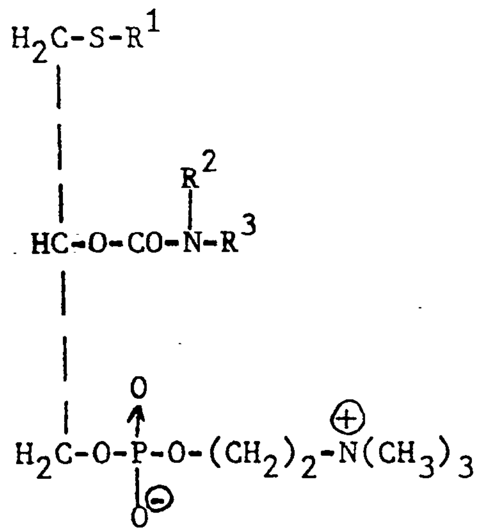

I

wherein $R^1$ is a straight chain saturated or unsaturated aliphatic hydrocarbyl radical with 10 to 20 carbon atoms, and $R^2$ and $R^3$, which may be the same or different, are hydrogen atoms or straight or branched chain saturated or unsaturated aliphatic hydrocarbyl radicals with 1 to 20 carbon atoms, or $R^3$ is a phenyl group, a phenyl group mono-substituted by $C_{1-3}$-alkyl, $C_{1-3}$-alkoxy, halogen or trifluoromethyl, or a benzyl group and $R^2$ is a hydrogen atom, provided $R^2$ and $R^3$ are not both hydrogen atoms.

2. 3-Alkylthio-2-0-carbamoyl-propane-1,2-diol-1-0-phos-phocholines as claimed in claim 1, wherein $R^2$ and $R^3$, which may be the same or different, are hydrogen atoms or straight or branched chain, saturated or unsaturated aliphatic hydrocarbyl radicals with 1 to 10 carbon atoms, or $R^3$ is a phenyl group, a phenyl group mono-substituted by methyl, methoxy, ethoxy, fluoro, chloro, bromo or trifluoromethyl, or a benzyl group and $R^2$ is a hydrogen atom.

3. 3-Alkylthio-2-0-carbamoyl-propane-1,2-diol-1-0-phos-phocholines according to claim 1 wherein $R^1$ is a straight chain alkyl radical with 16, 18 or 20 carbon atoms, and $R^2$ and $R^3$, which may be the same or different, are methyl, ethyl or isopropyl radicals or $R^2$ is a hydrogen atom and $R^3$ is a methyl, ethyl or isopropyl radical.

4. 3-Alkylthio-2-0-carbamoyl-propane-1,2-diol-1-0-phos-phocholines as claimed in claim 1, wherein $R^1$ is a straight chain saturated or unsaturated aliphatic hydrocarbyl radical with 10 to 20 carbon atoms, $R^2$ is a hydrogen atom, and $R^3$ is a straight chain saturated or unsaturated aliphatic hydrocarbyl radical with 10 to 20 carbon atoms.

5. 3-Alkylthio-2-0-carbamoyl-propane-1,2-diol-1-0-phos-phocholines as claimed in claim 4, wherein $R^1$ is a straight chain alkyl radical with 16 or 18 carbon atoms, $R^2$ is a hydrogen atom, and $R^3$ is a straight chain alkyl radical with 16 or 18 carbon atoms.

6. Process for the preparation of compounds of the formula I according to claims 1 to 5 wherein $R^2$ is a hydrogen atom, which comprises reacting a lysocompound of the general formula II

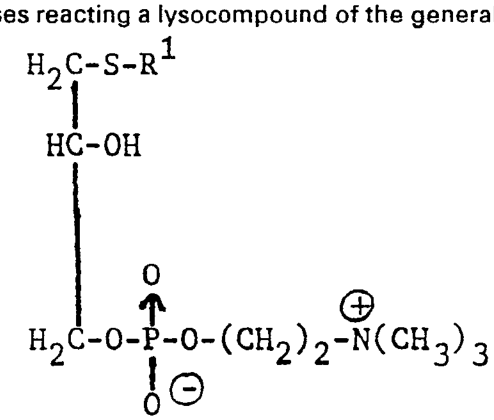

II

wherein $R^1$ is as defined in claim 1, in an aprotic organic solvent with optional addition of a Lewis base as catalyst, with an isocyanate of the formula III

$R^3$-N=C=O III

wherein $R^3$ is a straight or branched chain, saturated or unsaturated aliphatic hydrocarbyl radical with 1 to 20 carbon atoms, a phenyl group optionally monosubstituted by a halogen atom or a $C_{1-3}$ alkyl, $C_{1-3}$ alkoxy or trifluoromethyl group or a benzyl group.

7. Process for the preparation of compounds of the formula I according to claims 1 to 3 wherein $R^2$ and $R^3$ are straight or branched chain, saturated or unsaturated aliphatic hydrocarbyl radicals having 1 to 20 carbon atoms, comprising reacting a lysocompound of the formula II in an inert organic solvent with optional addition of an acid acceptor, with the corresponding carbamic acid chlorides of the formula IV

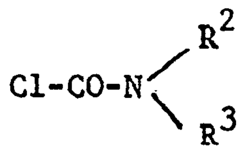

IV

wherein $R^2$ and $R^3$ are as defined above.

## Claims

(for Austria)

1. Process for the preparation of 3-alkylthio-2-0-carbamoyl-propane-1,2-diol-1-0-phosphocholines of the general formula I

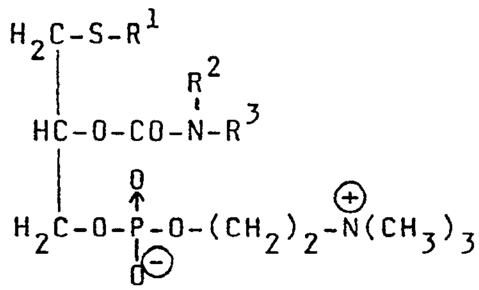

I

wherein $R^1$ is a straight chain saturated or unsaturated aliphatic hydrocarbyl radical with 10 to 20 carbon atoms,

$R^2$ is a hydrogen atom

and $R^3$, is a straight or branched chain saturated or unsaturated aliphatic hydrocarbyl radical with 1 to 20 carbon atoms, or $R^3$ is a phenyl group, a phenyl group mono-substituted by $C_{1-3}$-alkyl, $C_{1-3}$-alkoxy, halogen or trifluoromethyl, or a benzyl group which comprises reacting a lysocompound of the general formula II

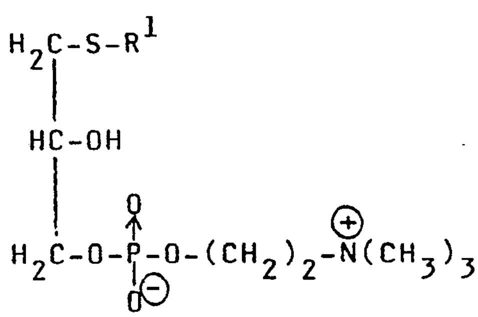

II

wherein $R^1$ is as defined in formula I, in an aprotic organic solvent with optional addition of a Lewis base as catalyst, with an isocyanate of the formula III

$R^3$-N=C=O III

wherein $R^3$ as defined above.

2. Process for the preparation of compounds of the formula I in claim 1 wherein $R^2$ and $R^3$, which may be the same or different, are straight or branched chain, saturated or unsaturated aliphatic hydrocarbyl radicals having 1 to 20 carbon atoms, comprising reacting a lysocompound of the formula II, wherein $R^2$ is a defined in claim 1, in an inert organic solvent with optional addition of an acid acceptor, with the corresponding carbamic acid chlorides of the formula IV

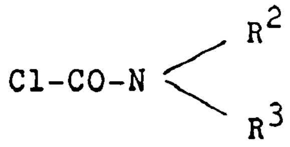

IV

wherein $R^2$ and $R^3$ are as defined above.

3. Process according to claim 1 wherein $R^2$ is as defined in claim 1, wherein a compound of formula II, is reacted with a compound of formula III, wherein $R^3$ is a straight or branched chain, saturated or unsaturated aliphatic hydrocarbyl radical with 1 to 10 carbon atoms, a phenyl group, a phenyl group mono-substituted by methyl, methoxy, ethoxy, fluoro, chloro, bromo or trifluoromethyl, or a benzyl group.

4. Process according to claim 1 wherein a compound of formula II, in which $R^1$ is a straight chain alkyl radical with 16, 18 or 20 carbon atoms, is reacted with a compound of formula III, wherein $R^3$ is a methyl, ethyl or isopropyl radical.

5. Process according to claim 1 wherein a compound of formula II, in which $R^1$ is a straight chain saturated or unsaturated aliphatic hydrocarbyl radical with 10 to 20 carbon atoms, is reacted with a compound of formula III, wherein $R^3$ is a straight chain saturated or unsaturated aliphatic hydrocarbyl radical with 10 to 20 carbon atoms.

6. Process according to claim 5 wherein a compound of formula II, wherein $R^1$ is a straight chain alkyl radical with 16 or 18 carbon atoms, is reacted with a compound of formula III, wherein $R^3$ is a straight chain alkyl radical with 16 or 18 carbon atoms.

7. Process according to claim 2 wherein a compound of the formula II, in which $R^1$ is a straight chain alkyl group with 16, 18 or 20 carbon atoms, is reacted with a compound of formula IV, in which $R^2$ and $R^3$, which may be the same or differen, are methyl, ethyl or isopropyl radicals.

**Patentansprüche**

1. 3-Alkylthio-2-0-carbamoyl-propan-1,2-diol-1-0-phospho-choline der allgemeinen Formel I

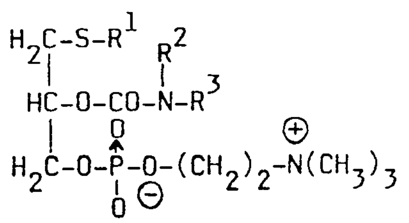

I

worin $R^1$ ein geradkettiger, gesättigter oder ungesättigter Kohlenwasserstoffrest mit 10 - 20 Kohlenstoffatomen, und $R^2$ und $R^3$, die gleich oder voneinander verschieden sein können, Wasserstoffatome oder geradkettige oder verzweigte, gesättigte oder ungesättigte Kohlenwasserstoffreste mit 1 bis 20 Kohlenstoffatomen, oder $R^3$ eine Phenylgruppe, oder eine durch $C_1$-$C_3$-Alkyl, $C_1$-$C_3$-Alkoxy, Halogen oder Trifluormethyl einfach substituierte Phenylgruppe, oder eine Benzylgruppe, und $R^2$ ein Wasserstoffatom ist, vorausgesetzt, daß $R^2$ und $R^3$ nicht beide Wasserstoffatome sind.

2. 3-Alkylthio-2-0-carbamoyl-propan-1,2-diol-1-0-phospho-choline gemäß Patentanspruch 1, worin $R^2$ und $R^3$, die gleich oder voneinander verschieden sein können, Wasserstoffatome, oder geradkettige oder verzweigte, gesättigte oder ungesättigte Kohlenwasserstoffreste mit 1 - 10 Kohlenstoffatomen, oder $R^3$ eine Phenylgruppe, oder durch Methyl, Methoxy, Ethoxy, Fluor, Chlor, Brom oder Trifluormethyl einfach substituierte Phenylgruppe, oder eine Benzylgruppe und $R^2$ ein Wasserstoffatom ist.

3. 3-Alkylthio-2-0-carbamoyl-propan-1,2-diol-1-0-phospho-choline gemäß Patentanspruch 1, worin $R^1$ ein geradkettiges Alkyl mit 16, 18 oder 20 Kohlenstoffatomen ist, und $R^2$ und $R^3$, die gleich oder voneinander verschieden sein können, Methyl, Ethyl oder Isopropyl sind, oder $R^2$ ein Wasserstoffatom und $R^3$ ein Methyl, Ethyl oder Isopropyl ist.

4. 3-Alkylthio-2-0-carbamoyl-propan-1,2-diol-1-0-phospho-choline gemäß Patentanspruch 1, worin $R^1$ ein geradkettiger, gesättigter oder ungesättigter Kohlenwasserstoffrest mit 10 - 20 Kohlenstoffatomen, $R^2$ ein Wasserstoffatom, und $R^3$ ein geradkettiger, gesättigter oder ungesättigter Kohlenwasserstoffrest mit 10 - 20 Kohlenstoffatomen ist.

5. 3-Alkylthio-2-0-carbamoyl-propan-1,2-diol-1-0-phospho-choline gemäß Patentanspruch 4, worin $R^1$ ein geradkettiges Alkyl mit 16 oder 18 Kohlenstoffatomen, $R^2$ ein Wasserstoffatom, und $R^3$ ein geradkettiges Alkyl mit 16 oder 18 Kohlenstoffatomen ist.

6. Verfahren zur Herstellung von Verbindungen der Formel I mit $R^2$ = Wasserstoff gemäß Patentansprüchen 1 - 5, dadurch gekennzeichnet, daß man Lysoverbindungen der allgemeinen Formel II

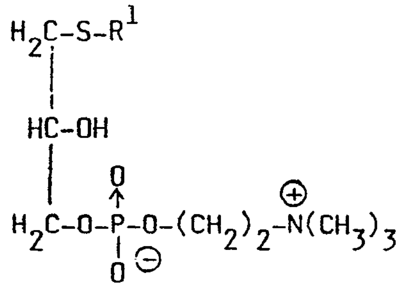

II

in der $R^1$ die in Anspruch 1 angegebene Bedeutung hat, in einem aprotischen organischen Lösungsmittel umsetzt, gegebenenfalls unter Zusatz einer Lewis-Base als Katalysator, mit einem Isocyanat der Formel III

$R^3\text{-}N=C=O$ III

in der $R^3$ ein geradkettiger oder verzweigter, gesättigter oder ungesättigter Kohlenwasserstoffrest mit 1 - 20 Kohlenstoffatomen, eine durch $C_1$-$C_3$-Alkyl, $C_1$-$C_3$-Alkoxy oder Trifluormethyl einfach substituierte Phenylgruppe, oder eine Benzylgruppe ist.

7. Verfahren zur Herstellung von Verbindungen der Formel I gemäß Patentansprüchen 1 - 3, worin $R^2$ und $R^3$ geradkettige oder verzweigte, gesättigte oder ungesättigte Kohlenwasserstoffreste mit 1 - 20 Kohlenstoffatomen sind, dadurch gekennzeichnet, daß man Lysoverbindungen der Formel II in einem inerten, organischen Lösungsmittel, gegebenenfalls unter Zusatz eines Säureakzeptors, mit den entsprechenden Carbamidsäurechloriden der Formel IV

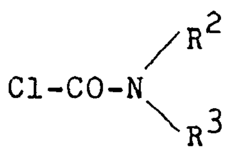

IV

umsetzt, in der $R^2$ und $R^3$ die oben angegebenen Bedeutungen haben.

**Patentansprüche**

(für Österreich)

1. Verfahren zur Herstellung von 3-Alkylthio-2-0-carbamoyl-propan-1,2-diol-1-0-phosphocholinen der allgemeinen Formel I

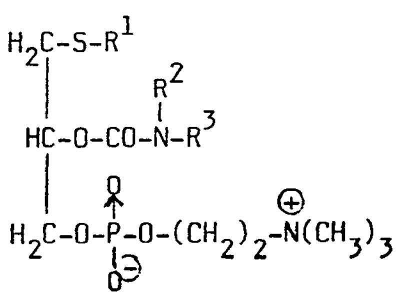

I

worin $R^1$ ein geradkettiger, gesättigter oder ungesättigter Kohlenwasserstoffrest mit 10 - 20 Kohlenstoffatomen, $R^2$ ein Wasserstoffatom und $R^3$ ein geradkettiger oder verzweigter, gesättigter oder ungesättigter Kohlenwasserstoffrest mit 1 - 20 Kohlenstoffatomen, eine Phenylgruppe, eine durch $C_1$-$C_3$-Alkyl, $C_1$-$C_3$-Alkoxy, Halogen oder Trifluormethyl einfach substituierte Phenylgruppe, oder eine Benzylgruppe ist, dadurch gekennzeichnet, daß man Lysoverbindungen der allgemeinen Formel II

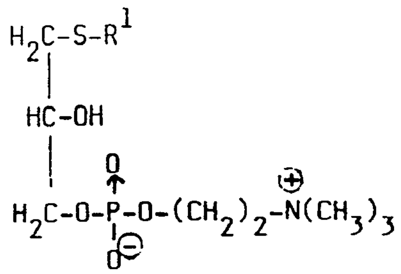

II

in der $R^1$ die in Formel I angegebene Bedeutung hat, in einem aprotischen organischen Lösungsmittel umsetzt, gegebenenfalls unter Zusatz einer Lewis-Base als Katalysator
mit einem Isocyanat der Formel III

$R^3-N=C=O$ III

in der $R^3$ die oben angegebene Bedeutung hat.

2. Verfahren zur Herstellung von Verbindungen der Formel I in Patentanspruch 1, in der $R^2$ und $R^3$, die gleich oder voneinander verschieden sein können, geradkettige oder verzweigte, gesättigte oder ungesättigte Kohlenwasserstoffreste mit 1 bis 20 Kohlenstoffatomen sind, dadurch gekennzeichnet, daß man Lysoverbindungen der Formel II, in der $R^2$ die in Anspruch 1 angegebene Bedeutung hat, in einem inerten organischen Lösungsmittel, gegebenenfalls unter Zusatz eines Säureakzeptors, mit den entsprechenden Carbamidsäurechloriden der Formel IV

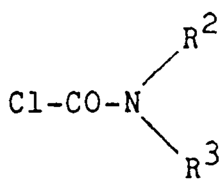

IV

umsetzt, in der $R^2$ und $R^3$ die oben angegebenen Bedeutungen haben.

3. Verfahren gemäß Anspruch 1, dadurch gekennzeichnet, daß man eine Verbindung der Formel II, in der $R^1$ die in Anspruch 1 angegebene Bedeutung hat, mit einer Verbindung der Formel III, in der $R^3$ ein geradkettiger oder verzweigter, gesättigter oder ungesättigter Kohlenwasserstoffrest mit 1 - 20 Kohlenstoffatomen, eine Phenylgruppe, eine durch Methyl, Methoxy, Ethoxy, Fluor, Chlor, Brom oder Trifluormethyl einfach substituierte Phenylgruppe, oder eine Benzylgruppe ist, umsetzt.

4. Verfahren gemäß Anspruch 1, dadurch gekennzeichnet, daß man eine Verbindung der Formel II, in der $R^1$ ein geradkettiges Alkyl mit 16, 18 oder 20 Kohlenstoffatomen ist, mit einer Verbindung der Formel III, in der $R^3$ ein Methyl, Ethyl oder Isopropyl ist, umsetzt.

5. Verfahren gemäß Anspruch 1, dadurch gekennzeichnet, daß man eine Verbindung der Formel II, in der $R^1$ ein geradkettiger, gesättigter oder ungesättigter Kohlenwasserstoffrest mit 10 - 20 Kohlenstoffatomen ist, mit einer Verbindung der Formel III, in der $R^3$ ein geradkettiger, gesättigter oder ungesättigter Kohlenwasserstoffrest mit 10 - 20 Kohlenstoffatomen, umsetzt.

6. Verfahren gemäß Anspruch 5, dadurch gekennzeichnet, daß man eine Verbindung der Formel II, in der $R^1$ ein geradkettiges Alkyl mit 16 oder 18 Kohlenstoffatomen ist, mit einer Verbindung der Formel III, in der $R^3$ ein geradkettiges Alkyl mit 16 oder 18 Kohlenstoffatomen ist, umsetzt.

7. Verfahren gemäß Anspruch 2, dadurch gekennzeichnet, daß man eine Verbindung der Formel II, in der $R^1$ eine geradkettige Alkylgruppe mit 16, 18 oder 20 Kohlenstoffatomen ist, mit einer Verbindung der Formel IV, in der $R^2$ und $R^3$, die gleich oder voneinander verschieden sein können, Methyl, Ethyl oder Isopropyl sind, umsetzt.

**Revendications**

1. Alkylthio-3 0-carbamoyl-2 propanediol-1,2 0-phosphocholines-1 répondant à la formule générale I

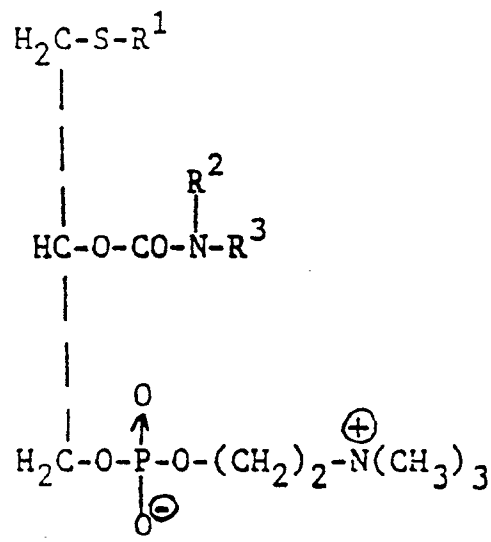

dans laquelle $R^1$ est un radical hydrocarboné aliphatique saturé ou insaturé à chaîne droite avec 10 à 20 atomes de carbone et $R^2$ et $R^3$, qui peuvent être identiques ou différents, sont des atomes d'hydrogène ou des radicaux hydrocarbonés aliphatiques saturés ou insaturés à chaîne droite ou ramifiée avec 1 à 20 atomes de carbone ou $R^3$ est un groupe phényle, un groupe phényle monosubstitué par un alkyle en $C_{1\text{-}3}$, un alcoxy en $C_{1\text{-}3}$, un halogène ou un trifluorométhyle ou un groupe benzyle et $R^2$ est un atome d'hydrogène, à condition que $R^2$ et $R^3$ ne soient pas tous les deux des atomes d'hydrogène.

2. Alkylthio-3 0-carbamoyl-2 propanediol-1,2 0-phos-phocholines-1 telles que revendiquées sous 1°, dans lesquelles $R^2$ et $R^3$, qui peuvent être identiques ou différents, sont des atomes d'hydrogène ou des radicaux hydrocarbonés aliphatiques, saturés ou insaturés, à chaîne droite ou ramifiée avec 1 à 10 atomes de carbone, ou $R^3$ est un groupe phényle, un groupe phényle monosubstitué par un méthyle, un méthoxy, un éthoxy, un fluoro, un chloro, un bromo ou un trifluorométhyle ou un groupe benzyle et $R^2$ est un atome d'hydrogène.

3. Alkylthio-3 O-carbamoyl-2 propanediol-1,2 O-phoschocholines-1 selon la revendication 1, dans lesquelles $R^1$ est un radical alkyle à chaîne droite avec 16, 18 ou 20 atomes de carbone et $R^2$ et $R^3$, qui peuvent être identiques ou différents, sont des radicaux méthyle, éthyle ou isopropyle ou $R^2$ est un atome d'hydrogène et $R^3$ est un radical méthyle, éthyle ou isopropyle.

4. Alkylthio-3 O-carbamoyl-2 propanediol-1,2 O-phosphocholines-1 selon la revendication 1, dans lesquelles $R^1$ est un radical hydrocarboné aliphatique, saturé ou insaturé à chaîne droite avec 10 à 20 atomes de carbone, $R^2$ est un atome d'hydrogène et $R^3$ est un radical hydrocarboné aliphatique, saturé ou insaturé, à chaîne droite avec 10 à 20 atomes de carbone.

5. Alkylthio-3 0-carbamoyl-2 propanediol-1,2 0-phosphocholines-1 selon la revendication 4, dans lesquelles $R^1$ est un radical alkyle à chaîne droite avec 16 ou 18 atomes de carbone, $R^2$ est un atome d'hydrogène et $R^3$ est un radical alkyle à chaîne droite avec 16 ou 18 atomes de carbone.

6. Procédé pour la préparation de composés de formule I selon les revendications 1 à 5 où $R^2$ est un atome d'hydrogène, qui consiste à faire réagir un lyso-composé de formule générale

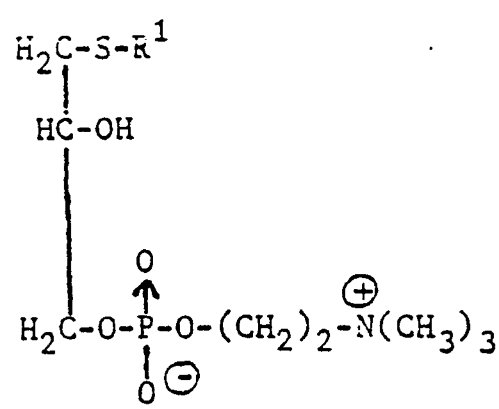

dans laquelle $R^1$ est tel que défini dans la revendication 1, dans un solvant organique aprotique avec addition éventuelle d'une base de Lewis comme catalyseur, avec un isocyanate de formule III

$R^3\text{-}N=C=O$

dans laquelle $R^3$ est un radical hydrocarboné aliphatique, saturé ou insaturé, à chaîne droite ou ramifiée avec 1 à 20 atomes de carbone, un groupe phényle éventuellement monosubstitué par un atome d'halogène ou un groupe alkyle en $C_{1\text{-}3}$, alcoxy en $C_{1\text{-}3}$ ou trifluorométhyle ou un groupe benzyle.

7. Procédé pour la préparation de composés de formule I selon les revendications 1 à 3 dans laquelle $R^2$ et $R^3$

sont des radicaux hydrocarbonés aliphatiques, saturés ou insaturés, a chaîne droite ou ramifiée ayant 1 à 20 atomes de carbone, procédé qui consiste à faire réagir un lyso-composé de formule II dans un solvant organique inerte avec addition éventuelle d'un accepteur d'acide, avec les chlorures de carbamyle correspondants de formule IV

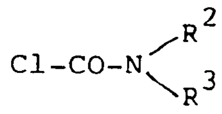

IV

dans laquelle $R^2$ et $R^3$ sont tels que définis précédemment.

## Revendications

AT

1- Procédé de préparation d'alkylthio-3 0-carbamoyl-2 propa-nédiol-1,2 0-phosphocholines-1 répondant à la formule générale I

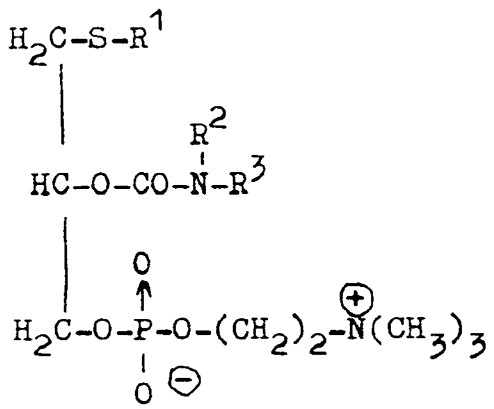

I

dans laquelle $R^1$ est un radical hydrocarboné aliphatique saturé ou insaturé à chaîne droite avec 10 à 20 atomes de carbone, $R^2$ est un atome d'hydrogène et $R^3$ est un radical hydrocarboné aliphatique saturé ou insaturé à chaîne droite ou ramifiée avec 1 à 20 atomes de carbone ou un groupe phényle, un groupe phényle monosubstitué par un alkyle en $C_{1-3}$, un alcoxy en $C_{1-3}$, un halogène ou un trifluorométhyle ou un groupe benzyle, qui consiste à faire réagir un lyso-composé de formule générale II

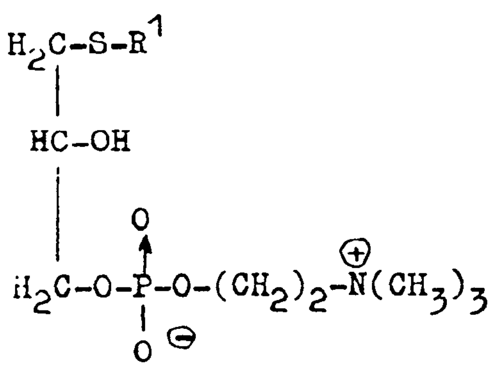

II

dans laquelle $R^1$ est tel que défini dans la formule I, dans un solvant organique aprotique avec addition éventuelle d'une base de Lewis comme catalyseur, avec un isocyamate de formule III

$R^3$-N=C=O III

dans laquelle $R^3$ est défini comme précédemment.

2 - Procédé pour la préparation de composés de formule I selon la revendication 1, dans lequel $R^2$ et $R^3$, qui peuvent être identiques ou différents, sont des radicaux hydrocarbonés aliphatiques, saturés ou insaturés, à chaîne droite ou ramifiée ayant 1 à 20 atomes de carbone, procédé comprenant la réaction d'un lyso-composé de formule II où $R^1$ est défini comme dans la revendication 1 dans un solvant organique inerte avec addition éventuelle d'un accepteur d'acide, avec les chlorures de carbamyle correspondants de formule IV

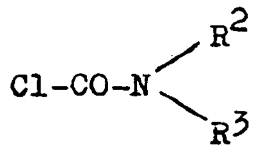

IV

dans laquelle $R^2$ et $R^3$ sont tels que définis précédemment.

3 - Procédé selon la revendication 1, dans lequel un composé de formule II, dans laquelle $R^1$ est défini comme dans la revendication 1, réagit avec un composé de formule III, dans laquelle $R^3$ est un radical hydrocarboné aliphatique, saturé ou insaturé, à chaîne droite ou ramifiée avec 1 à 10 atomes de carbone, ou un groupe phényle, un groupe phényle monosubstitué par un méthyle, un méthoxy, un éthoxy, un fluoro, un chloro, un bromo ou un trifluorométhyle ou un groupe benzyle.

4 - Procédé selon la revendication 1, dans lequel un composé de formule II, dans laquelle $R^1$ est un radical alkyle à chaîne droite avec 16, 18 ou 20 atomes de carbone, réagit avec un composé de formule III dans lequel $R^3$ est un radical méthyle, éthyle ou isopropyle.

5 - Procédé selon la revendication 1, dans lequel un composé de formule II, dans laquelle $R^1$ est un radical hydrocarboné aliphatique, saturé ou insaturé, à chaîne droite avec 10 à 20 atomes de carbone, réagit avec un composé de formule III, dans laquelle $R^3$ est un radical hydrocarboné aliphatique, saturé ou insaturé, à chaîne droite avec 10 à 20 atomes de carbone.

6 - Procédé selon la revendication 5, dans lequel un composé de formule II, dans lequel $R^1$ est un radical alkyle à chaîne droite avec 16 ou 18 atomes de carbone réagit avec un composé de formule III, dans laquelle $R^3$ est un radical alkyle à chaîne droite avec 16 ou 18 atomes de carbone.

7 - Procédé selon la revendication 2, dans lequel un composé de formule II, dans laquelle $R^1$ est un groupe alkyle à chaîne droite ayant 16, 18 ou 20 atomes de carbone, réagit avec un composé de formule IV, dans laquelle $R^2$ et $R^3$, qui peuvent être identiques ou différents sont des radicaux méthyle, éthyle ou isopropyle.